# EUROPEAN PATENT APPLICATION

(11) **EP 4 701 243 A1**
(43) Date of publication of application: **25.02.2026**
(21) Application number: 24195385.0
(22) Date of filing: 20.08.2024
(51) Int. Cl.: H04W 4/80, H04H 20/18, H04W 36/18, H04W 36/26

(54) **SYSTEM AND METHOD FOR PROVIDING AUDIO CONTENTS**

(71) Applicant: Sonova AG, 8712 Stäfa (CH)
(72) Inventor: Ferrari, Federico, 6900 Lugano (CH)
(74) Representative: Schwan Schorer & Partner mbB

(57) **Abstract**

There is provided a method for providing audio content from a first LE Audio transmitter device (10) or a second LE Audio transmitter device (20) to an LE Audio receiver device (30-1, 30-2; 32-1, 32-2; 34-1, 34-2), comprising: synchronizing the LE Audio receiver device and the second LE Audio transmitter device with the first LE Audio transmitter device; broadcasting, by the first LE Audio transmitter device using a first transmitter configuration and a first Broadcast Isochronous Stream (BIS) (40), a first audio content for reception by the LE Audio receiver device; and providing a transmitter device handover (100) by interrupting broadcasting of the first audio content by the first LE Audio transmitter device and starting broadcasting a second audio content, for reception by the LE Audio receiver device, by the second LE Audio transmitter device using said first transmitter configuration and said first BIS.

## Description

The invention relates to a method and a system for providing audio contents from a first Bluetooth^{®} Low Energy (LE) Audio transmitter device or a second LE Audio transmitter device to a LE Audio receiver device.

In practice, a first LE Audio broadcast transmitter device, such as a first wireless microphone used by a first speaking person, may broadcast a first audio content to one or more LE Audio broadcast receivers, which could be the hearing aids of one or more listeners, possibly of different manufacturers. Under certain trigger conditions, e.g. when a second person starts speaking on a second wireless microphone, it is desired that all LE Audio broadcast receivers quickly start to receive and render a second audio content from a second LE Audio broadcast transmitter device.

Typically, at the trigger condition the first transmitter device terminates broadcasting audio, causing the receivers to lose synchronization with it, and the second transmitter device starts broadcasting, possibly in a coordinated manner. To be able to receive audio from the second transmitter device, however, the receiver devices need to discover it and synchronize with it. These discovery and resynchronization steps may last several hundreds of milliseconds and may cause the receiver devices to miss an important part of the speech on the second wireless microphone. Furthermore, it is not for granted that a receiver device automatically starts discovering and/or synchronizing with the second transmitter device, and in some cases a user gesture may be required, making the user experience even worse.

A possible way to try to speed up the handover between the two transmitter devices would be for the receiver devices to discover the presence of two transmitter devices and remain synchronized with both of them, even if only the first transmitter device transmits audio. In this way, when the trigger condition occurs, the receiver devices could quickly detect that the second transmitter device has started to broadcast audio and switch to it. Remaining synchronized with two different transmitter devices however imposes an extra burden on the receiver devices in terms of scheduling and energy consumption. This approach would also not work on receiver devices that do not actively try to discover and synchronize with other transmitter devices while already receiving broadcast audio.

According to an approach described in US 10,694,301 B2 the first transmitter device transmits link parameters (e.g., access address, timings, frequency hopping sequence, encryption key) to the second transmitter device, and the second transmitter device uses these parameters to impersonate the first transmitter device and to broadcast audio to the receiver devices. In this way the two transmitter devices appear to be the same device to the receiver devices, allowing a receiver device to quickly detect and synchronize with the second transmitter device once the first transmitter device has stopped broadcasting audio. The LE Audio specifications, however, do not guarantee that a receiver device automatically starts to detect and quickly resynchronizes with a transmitter device, so that the resulting user experience with this approach when applied to LE Audio is expected to be poor.

WO 2022/155862 A1 proposes a method for an LE Audio broadcast receiver device to quickly switch between different Broadcast Isochronous Streams (BISes) that belong to the same Broadcast Isochronous Group (BIG) transmitted by a broadcast transmitter device. A possible application of this method is a user selecting a different language for the same audio content. In this case a single broadcast transmitter device is transmitting multiple audio streams, one of which is selected by the user.

WO 2023/018410 A1 relates to a LE Audio broadcast system with multiple microphones and LE Audio receiver devices, which may be used e.g. for question/answer sessions after a speech. This approach makes use of a host device, which could be the first LE Audio broadcast transmitter device or a separate device. This host device receives requests to transmit from one or more of the broadcast transmitter devices, one of which could be the second broadcast transmitter device. If the host device approves a request from a second transmitter device, the host device transmits details and timings of the second transmitter device to the receiver devices, which can then synchronize with the second transmitter device and receive audio from it.

Also US 2023/0137317 A1 addresses a system with multiple LE Audio broadcast transmitter devices. The main goal is to allow a receiver device to receive audio from one or more transmitter devices transmitting concurrently (and possibly switch between them) without having to pair it with the transmitter devices. This is achieved by letting the receiver device broadcast Bluetooth^{®} transmission parameters that include an audio broadcasting timing indicator: the transmitter devices receive these parameters and use them to schedule the transmission of audio packets using the timings provided by the receiver device.

It is an object of the invention to provide for a method and system for providing audio content from a first LE Audio transmitter device or a second LE Audio transmitter device to an LE Audio receiver device, which allows for satisfactory user experience, including a seamless transmitter device handover, without imposing additional burden on the LE Audio receiver device in terms of scheduling and energy consumption.

According to the invention, these objects are achieved by a method as defined in claim 1, and a system as defined in claim 15, respectively.

According to the invention, not only the LE Audio receiver device but also the second LE Audio transmitter device is synchronized with the first LE Audio transmitter device which uses a first transmitter configuration to broadcast a first audio content over a first Broadcast Isochronous Stream (BIS) for reception by the LE Audio receiver device, and, when broadcasting of the first audio content by the first LE Audio transmitter device is interrupted, broadcasting of a second audio content for reception by the LE Audio receiver device is started by the second LE Audio transmitter device likewise using the same first transmitter configuration and over the same first BIS used before by the first LE Audio transmitter device for broadcasting the first audio content.

Since the LE Audio receiver device remains synchronized during the transmitter device handover, a seamless transmitter device handover is achieved, without any additional burden on the LE Audio receiver device in terms of scheduling and energy consumption, such as a need for remaining synchronized in parallel with two different transmitter devices, and without any need for resynchronization or user interaction. In particular, such type of handover is completely transparent for the receiver device; except for the audio content, and possibly vendor-specific metadata information, the receiver device will be not even aware that a handover has occurred between the two transmitter devices.

It is noted that while in many cases of such seamless transmitter device handover there is neither simultaneous nor interrupted transmission of first and second audio content by the two transmitter devices (this is ideal in terms of wireless performance; in particular, thereby audio interruptions on the receiver devices can be avoided), there may be cases in which there is some short overlap period with simultaneous transmission of first and second audio content by the transmitter devices (e.g., for a few BIS data Protocol Data Units (PDUs)), i.e., cases in which the first LE Audio transmitter device stops broadcasting of the first audio content when the second LE Audio transmitter device has already started broadcasting of the second audio content or cases in which there are short gaps where neither transmitter device transmits audio content. While in both cases this would result in short audio interruptions on the receiver device, the transmitter device handover still is seamless in the sense that the receiver device remains synchronized.

This first transmitter configuration that the second transmitter uses after the handover includes any parameter, timing or Protocol Data Unit (PDU) field that allows a LE Audio receiver that is synchronized with the first LE Audio transmitter device and possibly receives audio data from it to automatically be synchronized with the second LE Audio transmitter device and possibly receive audio data from it after the handover - without any need for a resynchronization or user intervention.

According to one example, the first transmitter configuration may apply to a Periodic Advertising (PA) train and to an associated Broadcast Isochronous Group (BIG), which includes the first BIS, that are handed over from the first LE Audio transmitter device to the second LE Audio transmitter device in the transmitter device handover.

In particular, the first transmitter configuration may include at least one of: packet timings, frequency hopping sequence, advertiser's address, Access Address, CRC initialization value, encryption initialization values such as Broadcast_Code, Control Subevent Sequence Number (CSSN), and Control Subevent Transmission Flag (CSTF).

According to one example, the PA train may include transmission of at least one of the following LE periodic advertisement packets: AUX_SYNC_IND, AUX SYNC SUBEVENT_IND PDUs, and chained AUX_CHAIN_IND Protocol Data Unit (PDU).

According to one example, the BIG may include transmission of BIS Data PDUs and BIG Control PDUs.

According to one example, the second LE Audio transmitter device may derive the first transmitter configuration directly from the most recent PA train and/or BIG PDUs received from the first LE Audio transmitter device while being synchronized with the first LE Audio transmitter device.

According to one example, prior to the transmitter device handover the second LE Audio transmitter device may synchronize with the first LE Audio transmitter device using a standard LE mechanism, such as discovery via scan or periodic advertising sync transfer.

According to an alternative example, prior to the transmitter device handover the second LE Audio transmitter device may synchronize with the first LE Audio transmitter device using a proprietary method.

According to one example, the first LE Audio transmitter device and the second LE Audio transmitter device do not establish a dedicated link to exchange parameter of said first transmitter configuration.

According to one example, after the transmitter device handover the first LE Audio transmitter device may remain synchronized with the PA train and the associated BIG transmitted by the second LE Audio transmitter device so as to allow for a future new transmitter device handover in the opposite direction from the second LE Audio transmitter device to the first LE Audio transmitter device. In particular, if the first LE Audio transmitter device was transmitting additional PA trains, possibly for Periodic Advertising with Responses (PAwR), besides the PA train before the transmitter device handover, the first LE Audio transmitter device may interrupt packet transmissions on those additional PA trains and the second LE Audio transmitter device may start packet transmissions on those additional PA trains after the transmitter device handover.

According to one example, after the transmitter device handover 100) the second LE Audio transmitter device may transmit the same extended and periodic advertising data and may use the same advertising data identifier that the first LE Audio transmitter device was using before the transmitter device handover.

According to an alternative example after the transmitter device handover, the second LE Audio transmitter device may transmit extended and periodic advertising data and may use an advertising data identifier that are modified compared to the advertising data and the advertising data identifier which the first LE Audio transmitter device was using before the transmitter device handover, so as to inform LE Audio receiver devices that can interpret vendor-specific metadata transmitted by the second LE Audio transmitter device.

According to one example, after the transmitter device handover the second LE Audio transmitter device may enable extended advertising sets pointing to the PA train, so that LE Audio receiver devices that join after the transmitter device handover are enabled to discover the first LE Audio receiver device and synchronize with the second LE Audio receiver device.

According to one example, at least one of the first LE Audio transmitter device and the second LE Audio transmitter device may be configured to be worn or held by a speaker and comprises a microphone arrangement for capturing the speaker's voice as the audio content to be broadcast.

According to one example, the LE Audio receiver device may be a hearing device for stimulating the hearing of a user according to the received audio content. In particular, the hearing device may form part of a binaural hearing system.

Preferred embodiments of the invention are defined in the dependent claims.

Hereinafter, examples of the invention will be illustrated by reference to the attached drawing, wherein:
- Figs.: 1A and B are a schematic illustration of an example of a system according to the invention before and after a transmitter device handover, respectively;
- Fig. 2: is a schematic illustration of an example of a transmission scheme of Bluetooth^{®} packets transmitted by a first transmitter device before a transmitter device handover and by a second transmitter device after the transmitter device handover;
- Fig. 3: is a schematic illustration of the data exchange within a system comprising two transmitter devices and a receiver device before and after a transmitter device handover; and
- Fig. 4: is a flow diagram illustrating an example of a method for providing audio content from a first LE Audio transmitter device or a second LE Audio transmitter device to a LE Audio receiver device, including a seamless transmitter device handover.

A "hearing device" as used hereinafter is any ear level device suitable for reproducing sound by stimulating a user's hearing, such as an electroacoustic hearing aid, a bone conduction hearing aid, an active hearing protection device, a hearing prosthesis device such as a cochlear implant, a wireless headset, an earbud, an earplug, an earphone, etc.

A "LE Audio transmitter device" as used hereinafter is a device having a LE Audio interface and being configured to broadcast audio content via this interface as part of a broadcast stream. It is noted that audio broadcasting via Bluetooth^{®} Low Energy is a technology also known as "Auracast". In particular, such device implements the Public Broadcast Source (PBS) role as defined in the Bluetooth^{®} Public Broadcast Profile (PBP) specification and therefore acts as an audio source. It is noted that the broadcast stream, in addition to audio data, may have associated metadata which may be carried by associated periodic and extended advertisements.

A "LE Audio receiver device" as used hereinafter is a device having a LE Audio interface and being configured to receive audio content via this interface. In particular, such device implements the Public Broadcast Sink (PBK) role as defined in the Bluetooth^{®} Public Broadcast Profile (PBP) specification and therefore acts as an audio receiver device for receiving a broadcast stream from a LE Audio transmitter device acting as an audio transmitter device. For example, the LE Audio receiver device may be implemented as a hearing device, such as a hearing aid, which is worn by a student in a classroom.

A "transmitter configuration" as used hereinafter includes any parameter, timing, or Protocol Data Unit (PDU) field that allows a LE Audio receiver device to be synchronized with a first LE Audio transmitter device and possibly receive a first audio content from it and to automatically be synchronized with a second LE Audio transmitter device and possibly receive a second audio content from it after a transmitter device handover without any need for a resynchronization or user intervention.

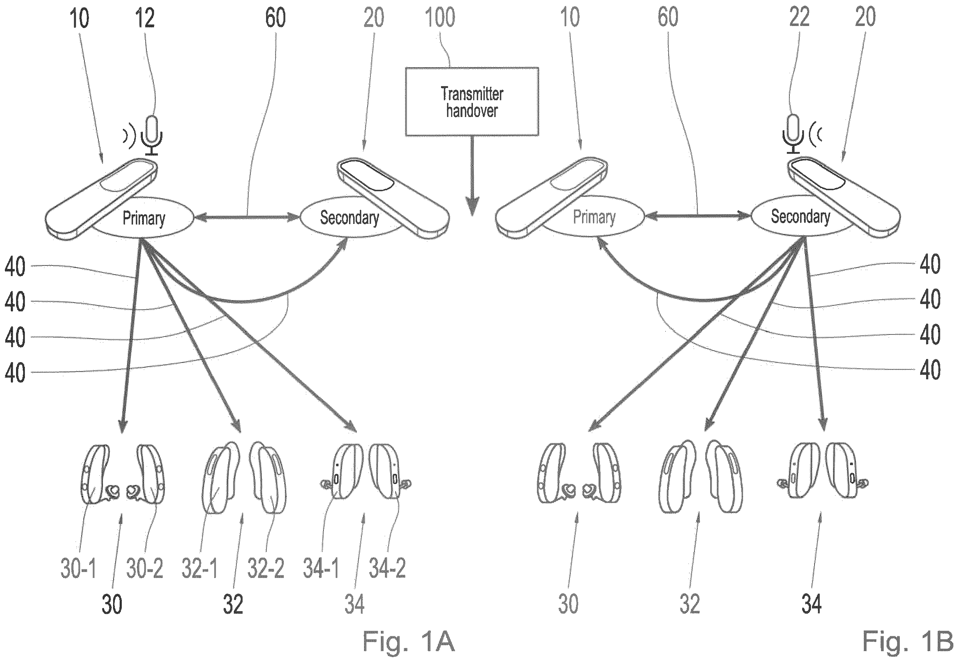

Figs. 1A and 1B are a schematic illustration of an example of a system for providing a broadcast stream before and after a transmitter device handover, respectively. The system comprises a first LE Audio transmitter device 10, a second LE Audio transmitter device 20 and a plurality of LE Audio receiver devices. In the example of Fig.1 , the first LE Audio transmitter device 10 and the second LE Audio transmitter device 20 are implemented as wireless microphone units to be worn or held by a speaker, each comprising a microphone arrangement 12, 22 for capturing the speaker's voice, and the LE Audio receiver devices are implemented as hearing devices 30-1, 30-2, 32-1, 32-2, 34-1 and 34-2 forming binaural hearing systems 30, 32 and 34, respectively.

For example, such system may be utilized in a classroom of an educational facility, with the LE Audio transmitter devices 10, 20 being used by teachers and the LE Audio receiver devices being used by students/pupils, wherein the teacher's voice captured by the LE Audio transmitter device 10 or 20 is broadcast as audio content of a broadcast stream 40 to be received and rendered by the LE Audio receiver devices to the students / pupils.

Fig. 1A illustrates a situation where only the first LE Audio transmitter device 10 is active to capture an audio signal (since its user is presently speaking) and to broadcast the captured audio signal as a first audio content which is received by the binaural hearing systems 30, 32, 34. To this end, the LE Audio receiver devices are synchronized with the first LE Audio transmitter device 10, which uses a first transmitter configuration for broadcasting a first audio content over a first Broadcast Isochronous Stream (BIS) (hereinafter referred to as "broadcast stream 40") - which is part of a Broadcast Isochronous Group (BIG) 80 - for reception by the LE Audio receiver device.

The second LE Audio transmitter device 20 at this time is inactive in the sense that it does not broadcast any audio content (for, example, since its user presently is not speaking). However, the second LE Audio transmitter device 20 - like the LE Audio receiver devices - is synchronized with the first LE Audio transmitter device 10 via reception of the broadcast stream 40. Further, there is optionally a control connection 60 between the first LE Audio transmitter device 10 and the second LE Audio transmitter device 20, which serves to ensure that at a time only one of the first LE Audio transmitter device 10 and the second LE Audio transmitter device 20 is active to broadcast a stream.

Fig. 1B illustrates a situation after a handover from the first LE Audio transmitter device 10 to the second LE Audio transmitter device 20 has occurred, for example, because the user of the first LE Audio transmitter device 10 has stopped talking and the user of the second LE Audio transmitter device 20 has started talking. Such handover may be negotiated between the first LE Audio transmitter device 10 and the second LE Audio transmitter device 20 via the control connection 60, for example as a result that a voice activity detector (VAD) of the first LE Audio transmitter device 10 no longer detects voice activity while the VAD of the second LE Audio transmitter device 20 starts to detect voice activity.

As a result, the first LE Audio transmitter device 10 has interrupted broadcasting of the first audio content via broadcast stream 40, while the second LE Audio transmitter device 20 has started to broadcast a second audio content corresponding to the user's voice captured by second LE Audio transmitter device 20, wherein the second LE Audio transmitter device 20 broadcasts using the same first transmitter configuration and over the same first BIS, i.e., the broadcast stream 40, used before by the first LE Audio transmitter device 10 for broadcasting the first audio content.

Since the second LE Audio transmitter device 20 - due to the synchronization with the first LE Audio transmitter device 10 - is already in possession of the first transmitter configuration of the first LE Audio transmitter device 10 when the handover is to occur, such transmitter handover can occur in a seamless manner, with no user interaction or resynchronization between the second LE Audio transmitter device 20 and the LE Audio receiver devices being necessary.

Also after the transmitter handover, the first LE Audio transmitter device 10 and the second LE Audio transmitter device 20 may remain synchronized via the broadcast stream 40, so as to allow later a seamless transmitter handover from the second LE Audio transmitter device 20 back to the first LE Audio transmitter device 10.

The concept of keeping the first LE Audio transmitter device 10 and the second LE Audio transmitter device 20 synchronized allows the two LE Audio transmitter devices 10, 20 to handle the handover in a way that is completely transparent for LE Audio receiver devices: except for the audio content (and possibly vendor-specific metadata information), the LE Audio receiver devices are not even aware that a handover has occurred between the two transmitter device 10, 20, since the same first transmitter configuration and the same first BIS will be used before and after the handover.

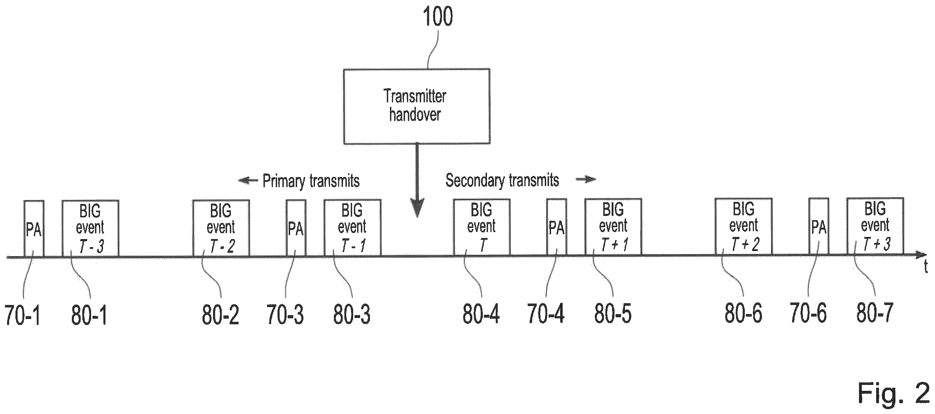

An example of LE Audio broadcast packets received by the LE Audio receiver devices before and after a transmitter handover is schematically illustrated in Fig. 2, wherein a sequence of Periodic Advertising (PA) train packets 70 and associated BIG events 80-1, 80-2, 80-3, are shown. The PA train packets 70 serve to provide synchronization, carry metadata, and point to the BIG (80), and the BIG events contain the audio content to be broadcast. It is apparent that the transmitter handover (indicated at 100) does not have any impact on the packet sequence received by the LE Audio receiver devices.

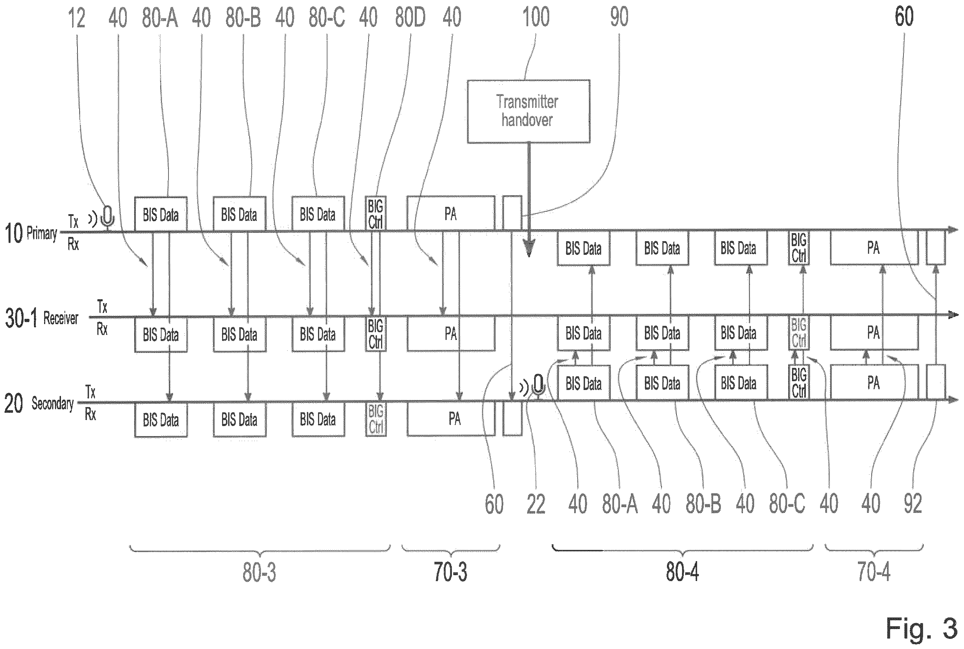

A more detailed illustration of the data exchange within a system comprising two transmitter devices 10, 20 and a receiver device 30-1 before and after a transmitter device handover 100 is shown in Fig. 3, where the last BIG event 80-3 before the transmitter handover 100 and the first BIG event 80-4 after the transmitter handover 100 and the respective PA packets 70 are shown in more detail. Each BIG event comprises BIS data Protocol Data Units (PDUs) (indicated at 80A, 80B and 80C), which represent the audio data packets to be broadcast, and BIG control PDUs (indicated at 80D) representing control data associated with the BIG. Before the transmitter handover 100, the BIG events (here: 80-3) and the PA packets (here: 70-3) are transmitted by the first LE Audio transmitter device 10 and are received both by the LE Audio receiver devices (here: 30-1) and by the second LE Audio transmitter device 20, whereas after the transmitter handover 100 the BIG events (here: 80-4) and the PA packets (here: 70-4) are transmitted by the second LE Audio transmitter device 20 and are received by the LE Audio receiver devices (here: 30-1) and optionally by the first LE Audio transmitter device 10. The transmitter handover 100 may be initiated by the first LE Audio transmitter device 10 by transmitting a handover control packet 90 via the link 60 to the second LE Audio transmitter device 20. It is also indicated in Fig. 3 that the transmission role may be handed back to the first LE Audio transmitter device 10 when the second LE Audio transmitter device 20 transmits a handover control packet 92 via the link 60 to the first LE Audio transmitter device 10.

As already mentioned above, the first transmitter configuration that the second LE Audio transmitter device 20 uses after the handover 100 includes any parameter, timing, or PDU field that allows a LE Audio receiver device that is synchronized with the first LE Audio transmitter device 10, and possibly receives audio data from it, to automatically be synchronized with the second LE Audio transmitter device, and possibly receive audio data from it, after the handover 100 - without any need for a resynchronization or user intervention.

In particular, the first transmitter configuration applies to the PA train and the associated BIG that are handed over from the first LE Audio transmitter device 10 to the second LE Audio transmitter device 20 and may include - but is not limited to - packet timings, frequency hopping sequence, advertiser's address, Access Address, CRC initialization value, encryption initialization values (e.g., Broadcast_Code), Control Subevent Sequence Number (CSSN), and/or Control Subevent Transmission Flag (CSTF).

The PA train may include transmission of AUX_SYNC_IND and/or AUX_SYNC_SUBEVENT_IND PDUs, and possible chained AUX_CHAIN_IND PDUs, and the BIG events may include transmission of BIS Data PDUs and BIG Control PDUs.

The second LE Audio transmitter device 20 may derive this first transmitter configuration directly from the most recent PA (here: PA 70-3) and BIG PDUs (here: 80-3) that it received from the first LE Audio transmitter device 10 while being synchronized with it. In this way no explicit data exchanges are needed between the two transmitter devices 10, 20 when the trigger condition occurs, allowing for a quick handover between them.

After the handover, the second LE Audio transmitter device 20 may transmit exactly the same (extended and periodic) advertising data and use exactly the same advertising data identifier that the first LE Audio transmitter device 10 was using before the handover. Alternatively, advertising data may also be modified, for example, to inform compatible receivers of the handover (e.g., as part of vendor-specific metadata).

After the handover, the second LE Audio transmitter device 20 may enable an extended advertising set pointing to the PA train 70 taken over from the first LE Audio transmitter device 10 during synchronization with the first LE Audio transmitter device 10 before the handover, so that LE Audio receiver devices that join after the handover can discover and synchronize with the second LE Audio transmitter device 20.

The synchronization of the second LE Audio transmitter device 20 with the first LE Audio transmitter device 10 prior to the transmitter handover may occur using either standard LE mechanisms (e.g., discovery via scan or periodic advertising sync transfer) or proprietary methods. Most importantly, it is not required for the two LE Audio transmitter devices 10, 20 to establish a dedicated link to exchange synchronization parameters (as it is suggested, for example, in US 10,694,301 B2). In particular, as illustrated in Fig. 3, the second LE Audio transmitter device 10 may learn about timing and frequency hopping parameters by synchronizing with the PA train and the associated BIG of the first LE Audio transmitter device 10, as done by any LE Audio receiver device currently receiving audio data from the first LE Audio transmitter device 10.

For example, if the first LE Audio transmitter device 10 was transmitting additional PA trains besides the PA train 70, possibly for Periodic Advertising with Responses (PAwR), the second LE Audio transmitter device 20 may optionally also start transmitting those PA trains using the exact same configurations that were used by the first LE Audio transmitter device 10.

Optionally, as illustrated in Figs. 1 and 3, the first LE Audio transmitter device 10 may remain synchronized with those same PA train 70 and associated BIG 80 now transmitted by the second LE Audio transmitter device 20 for a possible future new transmitter handover in the opposite direction back to the first LE Audio transmitter device 10

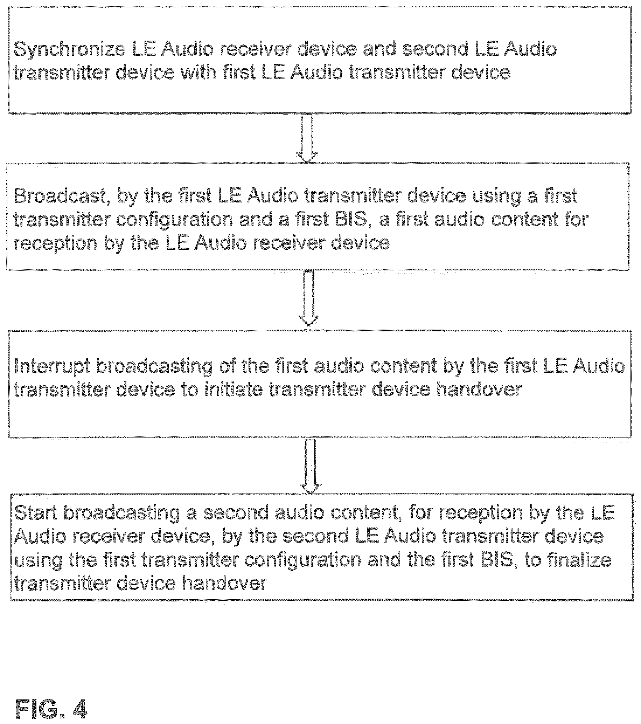

An example of a method for providing audio content from a first LE Audio transmitter device or a second LE Audio transmitter device to a LE Audio receiver device providing for seamless transmitter device handover is illustrated in Fig. 4

## Claims

1. A method for providing audio content from a first LE Audio transmitter device (10) or a second LE Audio transmitter device (20) to an LE Audio receiver device (30-1, 30-2; 32-1, 32-2; 34-1, 34-2), comprising:
synchronizing the LE Audio receiver device and the second LE Audio transmitter device with the first LE Audio transmitter device;
broadcasting, by the first LE Audio transmitter device using a first transmitter configuration and a first Broadcast Isochronous Stream (BIS) (40), a first audio content for reception by the LE Audio receiver device; and
providing a transmitter device handover (100) by interrupting broadcasting of the first audio content by the first LE Audio transmitter device and starting broadcasting a second audio content, for reception by the LE Audio receiver device, by the second LE Audio transmitter device using said first transmitter configuration and said first BIS.

2. The method of claim 1, wherein said first transmitter configuration applies to a Periodic Advertising (PA) train (70) and to an associated Broadcast Isochronous Group (BIG) (80), which includes said first BIS, that are handed over from the first LE Audio transmitter device (10) to the second LE Audio transmitter device (20) in the transmitter device handover (100).

3. The method of claim 2, wherein said first transmitter configuration includes at least one of: packet timings, frequency hopping sequence, advertiser's address, Access Address, CRC initialization value, encryption initialization values such as Broadcast_Code, Control Subevent Sequence Number (CSSN), and Control Subevent Transmission Flag (CSTF).

4. The method of one of claims 2 and 3, wherein the PA train includes transmission of at least one of the following LE periodic advertisement packets: AUX_SYNC_IND, AUX_SYNC_SUBEVENT_IND PDUs, and chained AUX_CHAIN_IND Protocol Data Unit (PDU).

5. The method of one of claims 2 to 4, wherein the BIG (80) includes transmission of BIS Data PDUs (80A, 80B, 80C) and BIG Control PDUs (80D).

6. The method of one of claims 2 to 5, wherein the second LE Audio transmitter device (20) derives said first transmitter configuration directly from the most recent PA train (70-3) and/or BIG PDUs (80-3) received from the first LE Audio transmitter device (10) while being synchronized with the first LE Audio transmitter device.

7. The method of one of the preceding claims, wherein prior to the transmitter device handover (100) the second LE Audio transmitter device (20) synchronizes with the first LE Audio transmitter device (10) using a standard LE mechanism, such as discovery via scan or periodic advertising sync transfer.

8. The method of claims 1 to 6, wherein prior to the transmitter device handover (100) the second LE Audio transmitter device (20) synchronizes with the first LE Audio transmitter device (10) using a proprietary method.

9. The method of claim 2, wherein after the transmitter device handover (100) the first LE Audio transmitter device (10) remains synchronized with the PA train (70) and the associated BIG (80) transmitted by the second LE Audio transmitter device (20) so as to allow for a future new transmitter device handover in the opposite direction from the second LE Audio transmitter device to the first LE Audio transmitter device.

10. The method of claim 9, wherein, if the first LE Audio transmitter device (10) was transmitting additional PA trains, possibly for Periodic Advertising with Responses (PAwR), besides the PA train (70) before the transmitter device handover (100), the first LE Audio transmitter device (10) interrupts packet transmissions on those additional PA trains and the second LE Audio transmitter device (20) starts packet transmissions on those additional PA trains after the transmitter device handover (100).

11. The method of one of the preceding claims, wherein after the transmitter device handover (100) the second LE Audio transmitter device (20) transmits the same extended and periodic advertising data and uses the same advertising data identifier that the first LE Audio transmitter device (10) was using before the transmitter device handover.

12. The method of one of claims 1 to 10, wherein after the transmitter device handover (100), the second LE Audio transmitter device (20) transmits extended and periodic advertising data and uses an advertising data identifier that are modified compared to the advertising data and the advertising data identifier which the first LE Audio transmitter device (10) was using before the transmitter device handover, so as to inform LE Audio receiver devices (30-1, 30-2; 32-1, 32-2; 34-1, 34-2) that can interpret vendor-specific metadata transmitted by the second LE Audio transmitter device.

13. The method of claim 2, wherein after the transmitter device handover (100) the second LE Audio transmitter device (20) enables extended advertising sets pointing to the PA train (70), so that LE Audio receiver devices that join after the transmitter device handover are enabled to discover the first LE Audio receiver device and synchronize with the second LE Audio receiver device.

14. The method of one of the preceding claims, wherein at least one of the first LE Audio transmitter device (10) and the second LE Audio transmitter device (20) is configured to be worn or held by a speaker and comprises a microphone arrangement (12, 22) for capturing the speaker's voice as the audio content to be broadcast.

15. A system for providing audio contents, comprising a first LE Audio transmitter device (10), a second LE Audio transmitter device (20), and an LE Audio receiver device (30-1, 30-2; 32-1, 32-2; 34-1, 34-2);
wherein the LE Audio receiver device and the second LE Audio transmitter device are configured to synchronize with a first LE Audio transmitter device which uses a first transmitter configuration for broadcasting a first audio content over a first Broadcast Isochronous Stream (BIS) (40) for reception by the LE Audio receiver device;
wherein the first LE Audio transmitter device is configured to interrupt broadcasting of the first audio content in case of a transmitter device handover (100); and
wherein the second LE Audio transmitter device is configured to start broadcasting, using said first transmitter configuration and over said first BIS, of a second audio content for reception by the LE Audio receiver device, in case of a transmitter device handover.
